Europäisches Patentamt

European Patent Office

Office européen des brevets

(19)

(11) Veröffentlichungsnummer: **0 161 621**
**B1**

(12) **EUROPÄISCHE PATENTSCHRIFT**

(45) Veröffentlichungstag der Patentschrifft:
28.02.90

(21) Anmeldenummer: 85105556.6

(22) Anmeldetag: 07.05.85

(51) Int. Cl.⁵: **A 01 B 49/02**, A 01 B 29/04

(54) Bodenbearbeitungsgerät.

(30) Priorität: 12.05.84 DE 8414544 U
11.09.84 DE 8426771 U

(43) Veröffentlichungstag der Anmeldung:
21.11.85 Patentblatt 85/47

(45) Bekanntmachung des Hinweises auf die Patenterteilung:
28.02.90 Patentblatt 90/09

(84) Bennante Vertragsstaaten:
AT DE FR GB IT NL

(56) Entgegenhaltungen:
EP-A-0 033 950
EP-A-0 093 193
DE-A-2 943 732
DE-A-3 004 576
DE-C-816 031
DE-U-8 317 606
FR-A-2 281 050
FR-A-2 372 583
FR-A-2 499 814
GB-A-2 014 021
US-A-2 241 675
US-A-2 663 241

(73) Patentinhaber: **Maschinenfabrik Rau GmbH**
**Johannes-Rau-Strasse**
**D-7315 Wellheim (DE)**

(72) Erfinder: **Rau, Willy**
**Johannes Rau-Strasse**
**D-7315 Wellheim-Teck (DE)**
Erfinder: **Taus, Christian**
**Galgenberg 19**
**D-7312 Kirchheim-Teck (DE)**

(74) Vertreter: **Dipl.-Phys.Dr. Manitz Dipl.-Ing. Finsterwald**
**Dipl.-Ing. Grämkow Dipl.-Chem.Dr. Heyn Dipl.-Phys.**
**Rotermund Morgan, B.Sc.(Phys)**
**Seelbergstrasse 23/25**
**D-7000 Stuttgart 50 (DE)**

LIBERGRAF, STOCKHOLM 1990

## Beschreibung

Die Erfindung betrifft ein Bodenbearbeitungsgerät mit Packer- oder Krümlerwalze, welche eine im wesentlichen geschlossene Umfangsfläche mit in parallelen umlaufenden Reihen angeordneten, in den Boden eindringenden Zähnen besitzt, zwischen denen Abstreifer mit verstellbaren Abstreiferblechen und dieselben tragenden Haltestielen angeordnet sind, die ihrerseits an einem Rahmenteil des Gerätes bzw. der Walze um eine Querachse schwenkbar gehaltert sind.

Ein entsprechendes Bodenbearbeitungsgerät wird in der EP-A-0 033 950 dargestellt. Bei diesem Bodenbearbeitungsgerät lassen sich die Haltestiele nur gemeinsam durch entsprechende Schwenkverstellung eines die Haltestiele tragenden Rahmenteiles schwenken. Auf diese Weise läßt sich im allgemeinen nur eine Grobeinstellung der Abstreiferbleche vornehmen. Bei der Bodenarbeit muß nämlich mit einem unterschiedlichen Verschleiß der Abstreiferbleche gerechnet werden, darüber hinaus können unter Umständen auch einzelne Haltestiele mehr oder weniger stark verbogen werden. Um den Verschleiß der Haltebleche bzw. die Verbiegung einzelner Haltestiele ausgleichen zu können, müssen deshalb die Abstreiferbleche zusätzlich an den Haltestielen verstellbar sein.

Somit kann die Einstellarbeit einen vergleichsweise großen Umfang annehmen.

Bei einem aus der FR-A-2 281 050 bekannten Bodenbearbeitungsgerät, bei dem die Zähne der Walze als Teile von Ringelementen ausgebildet sind, welche auf den zylindrischen Walzenmantel aufgeschoben werden, sind elastisch ausgebildete Abstreiferbleche an einem in Gerätequerrichtung erstreckten Träger mit Winkelprofil befestigt, dessen Position etwas in Gerätelängsrichtung verändert werden kann, da die zur Befestigung des Trägers dienenden Schrauben in Gerätelängsrichtung ausgerichtete Langlöcher am Träger bzw. am den Träger halternden Teil durchsetzen. Dabei ist der Träger etwas geneigt angeordnet, derart, daß die den einen Schenkel des Winkelprofils des Trägers verlängernden Abstreiferbleche schräg zur Vertikalrichtung gegen den Walzenmantel gerichtet sind und denselben mit ihren freien Enden etwa in Höhe der Walzenachse berühren. Die Abstreiferbleche können in Gerätequerrichtung sowie in Vertikalrichtung verstellt werden. Dazu ist jedes Abstreiferblech am Träger mittels einer Befestigungsschraube gehaltert, die ein in Vertikalrichtung erstrecktes Langloch am Abstreiferblech und ein in Gerätequerrichtung erstrecktes Langloch am Träger durchsetzt.

Diese Anordnung zeichnet sich zwar scheinbar durch einfache Konstruktion und gute Einstellbarkeit aus. Jedoch können in der Praxis keine zufriedenstellenden Ergebnisse erzielt werden, weil sich die Abstreifer bereits bei geringfügiger Lockerung der jeweiligen Befestigungsschraube verstellen. Dabei ist zu berücksichtigen, daß die Abstreiferbleche unter Umständen ungleichförmig belastet und damit bezüglich der Achse der Befestigungsschraube einem Drehmoment ausgesetzt werden. Dies führt aber relativ leicht dazu, daß sich die Befestigungsschraube bereits nach kürzerer Zeit lockert. Damit wird aber die Wirksamkeit der Abstreiferbleche stark beeinträchtigt.

Aufgabe der Erfindung ist es nun, ein Bodenbearbeitungsgerät zu schaffen, bei dem die Abstreifer der Packer- bzw. Krümlerwalze besonders leicht justierbar und gleichzeitig sicher verankert sind.

Diese Aufgabe wird erfindungsgemäß dadurch gelöst, daß das Abstreiferblech bzw. ein dasselbe tragendes Teil und der Haltestiel jedes Abstreifers als Teile eines einstückigen Blechteiles mit einem im Querschnitt etwa U-förmigen, den Haltestiel bildenden Mittelbereich ausgebildet sind, an den sich zur Befestigung am Rahmenteil ein Laschen- bzw. Flachbandteil einstückig anschließt, und daß die Haltestiele mittels am Rahmenteil angeordneter Stellschrauben od.dgl. gegen den Widerstand des sich dabei verbiegenden Übergangsbereiches zwischen Haltestiel und Laschen- bzw. Flachbandteil in Richtung der Walze verstellbar sind.

Die Stellschrauben können gut zugänglich in vergleichsweise großem Abstand von der Walze angeordnet sein, so daß die Justierung der Abstreifer sehr erleichtert wird. Im übrigen läßt sich bei der erfindungsgemäßen Konstruktion auch der Druck sehr leicht regulieren, mit dem der Abstreifer an der Walzenumfangsfläche anliegt.

Außerdem ist bei der Erfindung vorteilhaft, daß die Stellschrauben durch Stöße, welche unter Umständen auf die Abstreifer wirken, nicht im Sinne einer Drehbewegung beaufschlagt werden können. Dementsprechend reicht die übliche Selbsthemmung der Stellschrauben aus, eine langfristig unveränderte Einstellung der Abstreifer zu gewährleisten.

Auch wenn das Abstreiferblech als Verschleißteil austauschbar an einem entsprechenden Tragteil des Haltestieles angeordnet ist, erübrigt sich im Hinblick auf die Einstellbarkeit des Haltestieles eine gesonderte Justiermöglichkeit für das Abstreiferblech.

Das Laschen- bzw. Flachbandteil kann am Rahmenteil kraftschlüssig mittels Spannteilen befestigt sein, an denen jeweils auch die Stellschrauben angeordnet sein können.

Dazu kann gemäß einer besonders bevorzugten Ausführungsform jeweils ein U-Bügel, dessen eines Endteil eine im Übergangsbereich zwischen Laschen- bzw. Flachbandteil und Haltestiel angeordnete Öffnung durchsetzt und dessen Mittelteil und anderes Endteil auf dem Laschen- bzw. Flachbandteil aufliegen, unter Umfassung eines Rahmenquerholmes sowie des Laschen- bzw. Flachbandteiles mit einer von den Endstücken durchsetzten Platte verspannt sein, in der eine Gewindebohrung für die Stellschraube angeordnet ist.

Die erfindungsgemäßen Abstreifer haben sich insbesondere auch auf schweren und stark durchfeuchteten Böden, d.h. wenn sich auf dem Walzenumfang ein fester lehmartiger Belag zu bilden sucht, als besonders wirksam erwiesen.

Um darüber hinaus zu gewährleisten, daß bei der Bodenbearbeitung zwischen den Zahnreihen der Packer- bzw. Krümlerwalze besonders wenig Erde hängenbleiben kann, ist bevorzugt vorgesehen, daß die Zähne jeder Reihe jeweils unter Freilassung von Lücken aufeinanderfolgen, deren Querschnitt – in Achsansicht der Walze gesehen – größenordnungsmäßig mindestens dem Querschnitt der Zähne entspricht, und daß die Zähne benachbarter Reihen – wiederum in Achsansicht der Walze gesehen – versetzt zueinander angeordnet sind, derart, daß jeder Zahn einer Reihe in Höhe einer Lücke der anderen Reihe angeordnet ist.

Aufgrund dieser Anordnung besitzen die Zähne einer Reihe in Achsrichtung der Walze keine unmittelbaren Nachbarn in der Nachbarreihe. Damit wird die Gefahr einer Verstopfung des Raumes zwischen benachbarten Zahnreihen mit Erde od.dgl. wirksam vermindert, weil in Achsrichtung der Walze nebeneinanderliegende Zähne einen vergleichsweise großen Abstand haben. Dabei ist im Hinblick auf eine Verringerung der Verstopfungsgefahr der Zwischenräume vorteilhaft, wenn benachbarte Zahnreihen größenordnungsmäßig zumindest einen Abstand etwa entsprechend der Höhe der Zähne aufweisen.

Im übrigen wird der Bildung eines Belages auf der Walzenumfangsfläche auch dadurch entgegengewirkt, daß zwischen aufeinanderfolgenden Zähnen einer Zahnreihe keinerlei Stege auf der Umfangsfläche der Packer- bzw. Krümlerwalze angeordnet sind, so daß am Walzenmantel anhaftende Erde leicht zwischen aufeinanderfolgenden Zähnen einer Zahnreihe hindurchgeschoben werden kann.

Für die Zahnform ist zweckmäßig, wenn die im wesentlichen plattenförmigen Zähne entgegen der Umlaufrichtung der Walze weisende Vorderkanten, welche mit der Umfangsfläche der Walze einen spitzen Winkel einschließen, zu den Vorderkanten im wesentlichen parallele Hinterkanten sowie zwischen Vorder- und Hinterkante erstreckte Außenkanten besitzen, deren Abstand von der Mantelfläche von der Vorderkante zur Hinterkante hin abnimmt. Bei dieser Zahnform können die Zähne ohne jeden Schnittverlust aus einem Blech geschnitten werden, wenn die Außenkante gleiche Krümmung wie der an der Umfangsfläche der Walze befestigte bzw. verschweißte Rand der Zähne hat.

Außerdem ist diese Zahnform hinsichtlich der Bodenarbeit vorteilhaft, weil die Zähne entgegen der Umlaufrichtung weisende Spitzen besitzen, die das Eindringen der Zähne in den Boden erleichtern. Dabei wird der Boden von der relativ großen Außenkante auf einem entsprechend großen Bereich mit vergleichsweise großer Tiefe durchsetzt, wobei Brücken verfestigter Erde zwischen den oberen Bodenschichten und den tieferen Bodenbereichen erzeugt werden. Die von den Zähnen im Boden erzeugten Löcher werden praktisch sofort von Erdkrümeln zugesetzt, da die genannte Zahnform eine gute Krümelwirkung hat, insbesondere weil im Boden Löcher mit instabilen, zur Krümelung neigenden Wandungen erzeugt werden.

Die Packer- bzw. Krümlerwalze kann hinter einem zapfwellengetriebenen Zinkenrotor angeordnet sein. Dabei ist eine Anordnung bevorzugt, bei der der Zinkenrotor lediglich nach oben abgedeckt ist und nach hinten im wesentlichen nur durch die dicht bzw. unmittelbar hinter dem Zinkenrotor angeordnete Packer- bzw. Krümlerwalze abgeschirmt wird, deren zinkenrotorseitiger Umfangsflächenbereich dann als umlaufende Prallfläche die vom Zinkenrotor aufgeworfene Erde zur Bodenoberfläche neigt.

Bei hinreichend dichter Anordnung hinter dem Zinkenrotor, welcher bevorzugt in einer die Fahrtrichtung unterstützenden Umlaufrichtung angetrieben wird, kann die Packer- bzw. Krümlerwalze auch die Funktion einer Abschirmung des Rotors nach hinten übernehmen und dabei das vom Zinkenrotor aufgeworfene Erdreich gleichmäßig auf der Bodenoberfläche ablegen, wobei größere Erdklumpen unter Einwirkung der Zahnelemente der Walze sehr wirksam zerkleinert werden. Im übrigen tritt noch ein kombinatorischer Effekt auf, indem auf der Packer- bzw. Krümlerwalze anhaftende Erde durch die vom Zinkenrotor gegen die Walze geschleuderte Erde und Erdbrocken wirksam gelockert wird.

Durch den Wegfall einer gesonderten Abschirmung des Zinkenrotors nach hinten können auch bei sehr lehmigen und feuchten Böden hinter dem Zinkenrotor am Bodenbearbeitungsgerät keinerlei Ansammlungen von Erde gebildet werden, die ihrerseits zu einer Erhöhung des Gewichtes des Bodenbearbeitungsgerätes und damit zu einer Erschwernis beim Anheben desselben vom Zugfahrzeug aus führen würden. Darüber hinaus wird durch die Vermeidung von Erdansammlungen in der Nähe des Zinkenrotors auch die notwendige Antriebsleistung für den Rotor vermindert, weil der Zinkenrotor lediglich gegen den Widerstand des Bodens, nicht jedoch auch gegen den Widerstand von Erdansammlungen innerhalb der Rotorverkleidung arbeiten muß.

Die die eigentliche Bodenarbeit übernehmenden Zinkenendstücke des Zinkenrotors sind in an sich bekannter Weise jeweils tangential zu einem die Rotorachse umschließenden Kreisbogen angeordnet, wobei das freie Ende der Zinkenendstücke jeweils mit einem von der Rotorachse zum freien Zinkenende erstreckten Radialstrahl einen spitzen Winkel einschließt. Diese Anordnung erleichtert das Eindringen der Zinken in den Boden, gleichzeitig wird auf denselben auch eine anhebende Wirkung ausgeübt.

Es kann zweckmäßig sein, wenn an den freien Enden der Zinkenendstücke – vorzugsweise in Umlaufrichtung zugespitzte – scharartige Platten etwa tangential zu einer Umhüllenden des Rotors angeordnet sind. Dadurch erhält der Zinkenrotor eine besonders ausgeprägte Schälwirkung, wie es oftmals erwünscht sein kann, insbesondere wenn beispielsweise Stoppelfelder oder sonstige Böden mit viel Wurzelwerk umgebrochen werden sollen.

Weitere zweckmäßige Ausführungsformen der Erfindung gehen aus den Ansprüchen sowie der nachfolgenden Beschreibung bevorzugter Ausführungsbeispiele hervor, die in der Zeichnung dargestellt sind.

Dabei zeigt

Fig. 1     eine teilweise schematisierte und aufgerissene Seitenansicht eines erfindungsgemäßen Bodenbearbeitungsgerätes,

Fig. 2     eine Draufsicht auf ein an diesem Gerät angeordnetes Kolben-Zylinder-Aggregat gemäß dem Pfeil II in Fig. 1,

Fig. 3     eine Achsansicht der Packer- bzw. Krümlerwalze zusammen mit Abstreiferelementen,

Fig. 4     eine Ansicht der Abstreiferelemente entsprechend dem Pfeil IV in Fig. 3,

Fig. 5     eine Seitenansicht eines kompletten Zinkens des Zinkenrotors und

Fig. 6     eine Seitenansicht sowie eine Achsansicht eines abgewandelten Zinkenendstückes mit scharblattartig ausgeformtem freien Ende.

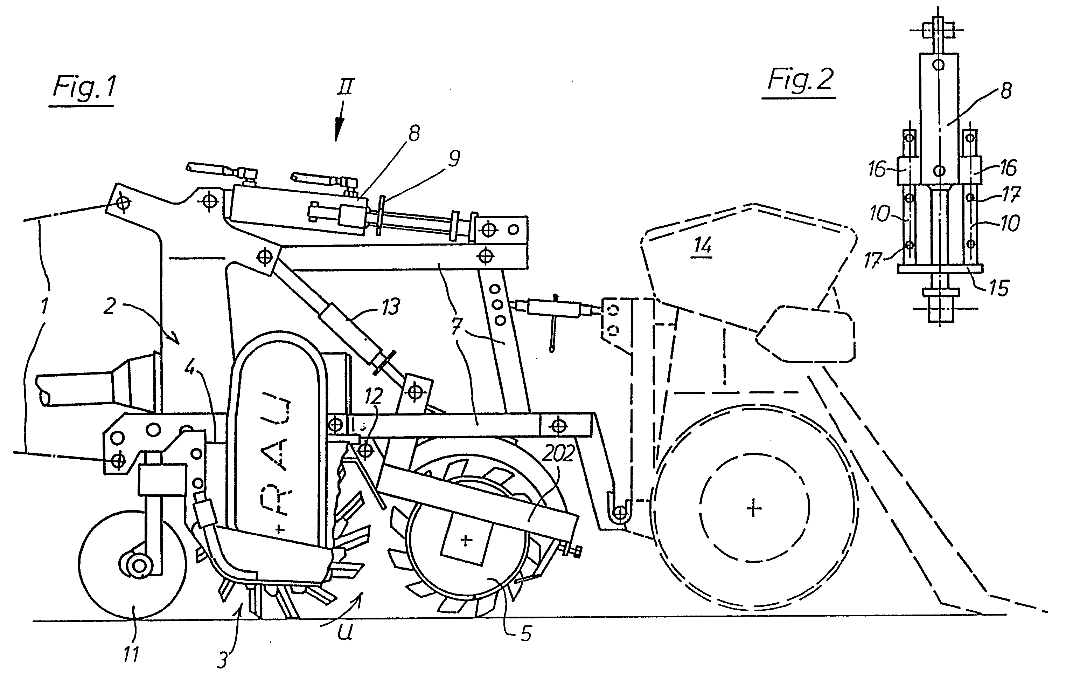

Das in Fig. 1 dargestellte Bodenbearbeitungsgerät besitzt einen bockartigen Rahmen 2, welcher mittels eines Dreipunktgestänges 1 an ein nicht dargestelltes Zugfahrzeug höhenbeweglich sowie anhebbar gekoppelt ist.

Der Rahmen 2 trägt einen Zinkenrotor 3, vor dem noch vorauslaufende Werkzeuge, beispielsweise Scheibenräder 11 oder auch Scharwerkzeuge od.dgl., angeordnet sein können.

An Gelenken 12 ist mittels eines Hilfsrahmens 202 eine Krümelwalze 5 angeordnet. Der Hilfsrahmen 202 ist über eine Spindel 13, gegebenenfalls federnd (Federn nicht dargestellt), gegen den Rahmen 2 abgestützt.

Bei der Bodenarbeit bestimmt die Einstellung der Spindel 13 den Bodenabstand des Rahmens 2, da dessen Gewicht sowie das Gewicht der an ihm befestigten Geräte über die Krümlerwalze 5 auf dem Boden abgestützt wird. Dementsprechend bestimmt auch die Einstellung der Spindel 13 die Arbeitstiefe des Zinkenrotors 3 sowie der sonstigen, am Rahmen 2 befestigten Bodenbearbeitungswerkzeuge.

Erfindungsgemäß sind der Zinkenrotor 3 und die Krümelwalze 5 dicht hintereinander angeordnet. Damit genügt es, wenn das den Zinkenrotor 3 verkleidende Gehäuse im wesentlichen als denselben nach oben abschirmende Abdeckung 4 ausgebildet ist, während die Krümelwalze 5 den Zinkenrotor 3 nach hinten abschirmt. Dementsprechend wird die vom Zinkenrotor 3 beim Umlauf in Umlaufrichtung U hochgeschleuderte Erde gegen die Krümelwalze 5 geworfen und dann von derselben auf die Bodenoberfläche geleitet. Dabei werden einerseits grobe Erdstücke beim Aufprall auf der Krümelwalze bzw. deren Zähnen zerkleinert, andererseits löst das vom Zinkenrotor 3 gegen die Krümelwalze 5 geworfene Erdreich gegebenenfalls auf der Walzenumfangsfläche anhaftende Erde.

Am bockartigen Rahmen 2 kann ein parallelogrammartiges Hubgestänge 7 angeordnet sein, welches im dargestellten Beispiel zur Anordnung einer strichliert dargestellten Sämaschine 14 dient. Mittels eines Kolben-Zylinder-Aggregates 8 kann das Hubgestänge 7 aus der in Fig. 1 dargestellten Lage, bei der die Sämaschine 14 nach hinten in die Arbeitslage abgesenkt ist, in eine angehobene Transportstellung hochgeschwenkt werden, bei der die Sämaschine 14 eine Lage oberhalb des Zinkenrotors 3 einnimmt. Falls das Kolben-Zylinder-Aggregat 8 doppelt wirkend ausgebildet ist, kann diese letztere Lage als Übertotpunktlage ausgebildet sein.

Im übrigen wird die Sämaschine 14 oder das sonstige, an dieser Stelle angeordnete Gerät in der Regel auch bei Wendemanövern bei der Bodenbearbeitung angehoben. Wenn allerdings die Sämaschine 14 oder das sonstige Gerät mittels eigener Zapfwelle angetrieben werden soll, ist zu beachten, daß der maximale Knickwinkel dieser Zapfwelle bei den Wendemanövern nicht überschritten werden soll. Dies ist gleichbedeutend, daß die Sämaschine 14 od.dgl. bei Wendemanövern nur relativ wenig angehoben werden soll. Um dies sicher zu gewährleisten, läßt sich der Hubweg des Kolben-Zylinder-Aggregates 8 gegebenenfalls entsprechend begrenzen. Dazu sind parallel zur Kolbenstange dieses Aggregates 8 zwei Stangen 10 vorgesehen, die mittels eines Joches 15 an der Kolbenstange befestigt sind. Die Stangen 10 lassen sich teleskopartig in zugehörige Führungsteile 16 verschieben, die fest am Zylinder des Kolben-Zylinder-Aggregates 8 angeordnet sind. In den Stangen 10 sind Querbohrungen 17 angeordnet, die zur Aufnahme von Bolzen od.dgl. dienen, welche mit den Führungsteilen 16 als Anschläge zusammenwirken und dementsprechend den Hub des Kolben-Zylinder-Aggregates 8 zu begrenzen vermögen. Außerdem ist es damit möglich, das Kolben-Zylinder-Aggregat gegebenenfalls auch zu blockieren, insbesondere wenn die Sämaschine 14 ihre angehobene Transportstellung einnimmt, so daß dieselbe gesichert wird.

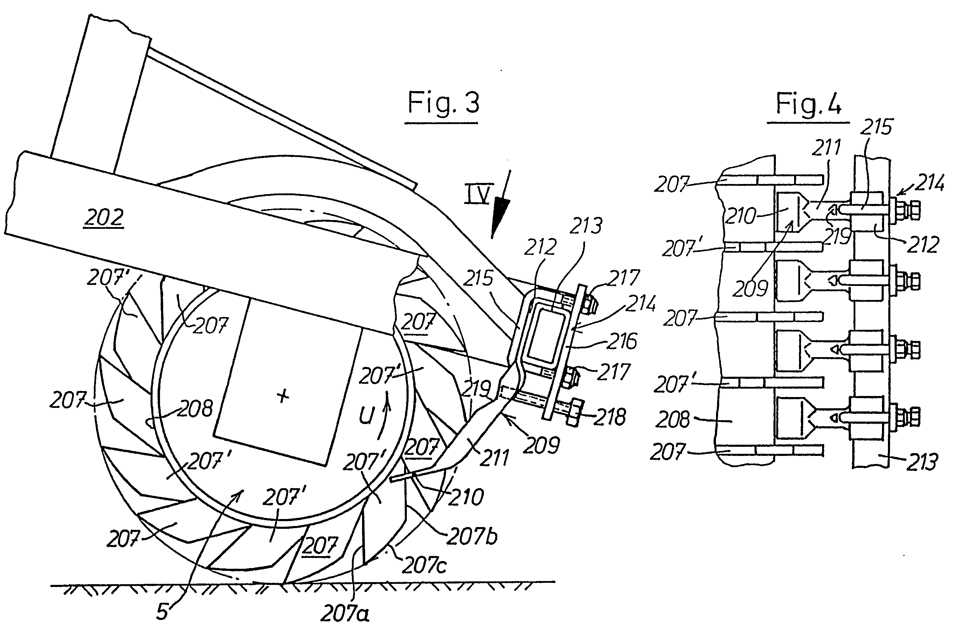

Gemäß Fig. 3 besitzt die Krümelwalze 5 plattenförmige und in Achsansicht der Walze 5 etwa rautenförmige Zähne 207, 207', welche in parallelen, in Umlaufrichtung der Umfangsfläche 208 der Walze 5 verlaufenden Reihen nebeneinander angeordnet sind. In Fig. 3 sind zwei Zahnreihen sichtbar, indem die Zähne 207 eine vordere und die Zähne 207' eine dazu unmittelbar benachbarte hintere Reihe darstellen. Die Zähne der nächstfolgenden Reihen decken sich mit den Zähnen 207, während die Zähne der dahinter angeordneten Reihe mit den Zähnen 207' deckungsgleich usw.

Die Zähne 207 bzw. 207' besitzen jeweils eine entgegen der Umlaufrichtung U weisende Vorderkante 207a, welche mit der Umfangsfläche 208 einen spitzen Winkel einschließt. Die Hinterkante 207b der Zähne verläuft etwa parallel zur jeweiligen Vorderkante 207a und besitzt etwa gleiche Länge. Zwischen Vorder- und Hinterkante 207a und 207b erstreckt sich die gekrümmte Außenkante 207c, die etwa gleichen Krümmungsradius wie der umfangsflächenseitige Rand der Zähne 207 bzw. 207' aufweist und deren Abstand von der Umfangsfläche 208 dementsprechend von der Vorderkante 207a zur Hinterkante 207b hin abnimmt.

Die Zähne 207 bzw. 207' jeder Reihe folgen unter Freilassung von Lücken aufeinander, deren Querschnitt in Achsansicht der Walze 5 größenordnungsmäßig zumindest etwa gleich groß wie der Querschnitt der Zähne 207 bzw. 207' ist.

Im dargestellten Beispiel ist der Querschnitt der Lücken sogar deutlich größer, weil der Abstand aufeinanderfolgender Zähne 207 bzw. 207' einer Reihe bei Messung an der Umfangsfläche 208 etwa der Erstreckung der Zähne 207 bzw. 207' in Umfangsrichtung an der Umfangsfläche 208 entspricht.

Da die Zähne 207 bzw. 207' in Achsrichtung der Walze in der jeweils benachbarten Zahnreihe keinen unmittelbaren Nachbarn haben und da im übrigen zwischen aufeinanderfolgenden Zähnen 207 bzw. 207' einer Zahnreihe keinerlei Stege auf der Umfangsfläche 208 der Krümelwalze 5 angeordnet sind, bleibt an der Krümelwalze 5 auch bei Arbeit auf feuchten und lehmigen Böden verhältnismäßig wenig Erde hängen.

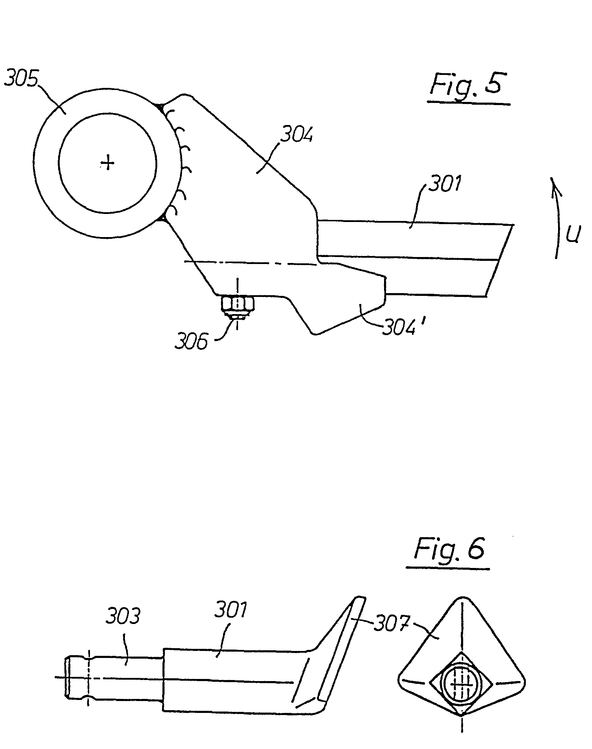

Diese kann gegebenenfalls gemäß den Figuren 3 und 4 durch zwischen den Zahnreihen 207 bzw. 207' angeordnete Abstreifer 209 abgelöst werden, welche als einstückige Blechteile mit Abstreiferblech 210, Haltestiel 211 sowie Laschenteil 212 ausgebildet sind. Gegebenenfalls kann allerdings das Abstreiferblech 210 als Verschleißteil austauschbar an einem mit dem Haltestiel 211 einstückig verbundenen Blechstück befestigt sein.

Im dargestellten Beispiel setzt sich das im wesentlichen plattenförmige Abstreiferblech 210, dessen Breite in Achsrichtung der Walze 5 geringer ist als der Abstand benachbarter Zahnreihen 207 und 207', in den U-förmigen Querschnitt mit nach rückwärts geöffneter U-Rinne aufweisenden Haltestiel 211 und dieser wiederum in das Laschenteil 212 fort, so daß die Abstreifer 209 jeweils aus etwa rechteckigen Blechstücken mittels Preßwerkzeuge hergestellt werden können.

Das Laschenteil 212 legt sich jeweils winkelförmig an einen Querholm 213 des Rahmens 202 an und ist mit dem Querholm 213 mittels einer Spannvorrichtung 214 kraftschlüssig verbunden.

Die Spannvorrichtung 214 besteht im wesentlichen aus einem U-Bügel 215, dessen eines Endteil eine im Abstreifer 209 angeordnete Öffnung im Übergangsbereich zwischen Haltestiel 211 und Laschenteil 212 durchsetzt, und dessen Mittelteil und anderes Endstück auf dem Laschenteil 212 auf- bzw. anliegen. Beide Endstücke des U-Bügels 215 durchsetzen mit einem Gewindeabschnitt eine Platte 216, mit der der U-Bügel 215 unter Umfassung des Querholmes 213 bzw. des Laschenteiles 212 mittels Muttern 217 in der in Fig. 3 dargestellten Weise verspannt ist.

Am unteren Ende der Platte 216 ist eine Gewindebohrung angeordnet, welche eine Stellschraube 218 aufnimmt, deren Schaft bei entsprechender Verschraubung der Stellschraube 218 gegen den Haltestiel des zugehörigen Abstreifers 209 vorgeschoben werden kann, derart, daß der Haltestiel 211 zusammen mit dem Abstreiferblech 10 eine Schwenkbewegung in Richtung der Walze 5 unter mehr oder weniger elastischer Verformung des Übergangsbereiches zwischen Haltestiel 211 und Laschenteil 212 ausführt. Damit können die Abstreifer 209 mittels der leicht zugänglichen Stellschrauben 218 jederzeit justiert bzw. nachjustiert werden.

Als Anschlag für den Schaft der Stellschrauben 218 kann am Haltestiel 211 jeweils eine den Haltestiel in Gerätequerrichtung durchsetzende Wölbung 219 angeordnet sein, deren Konvexseite der jeweiligen Stellschraube 218 zugewandt ist.

Die dargestellte Verspannung der Abstreifer 209 am Querholm 213 bietet die vorteilhafte Möglichkeit, die Abstreifer 209 auch in Querrichtung des Gerätes zu verstellen, so daß die Abstreiferbleche 210 immer – auch nach Beschädigung der Abstreifer 209 – auf eine Mittellage zwischen benachbarten Zahnreihen 207 und 207' einstellbar sind.

Nach Fig. 5 besteht jeder Zinken des Zinkenrotors aus einem austauschbaren Zinkenendstück 301, welches die eigentliche Bodenarbeit übernimmt, und einem bevorzugt geschmiedeten Haltearm 304, welcher an der Rotorachse 305 angeschweißt ist. Dabei ist das Zinkenendstück 301 tangential zu einem die Rotorachse 305 umschließenden Kreisbogen angeordnet, und zwar derart, daß das Zinkenendstück 301 mit einem von der Rotorachse 305 zum freien Ende des Zinkenendstückes 301 erstreckten Radialstrahl einen spitzen Winkel einschließt.

Wie in Fig. 6 dargestellt ist, besitzt das Zinkenendstück 301 einen zylindrischen Endzapfen 303, welcher einen geringeren Querschnitt als das übrige Zinkenendstück 301 besitzt. Mittels dieses Endzapfens 303 läßt sich das Zinkenendstück 301 in eine entsprechende Aufnahmebohrung am Haltearm 304 einsetzen und dort mittels eines Schraubbolzens 306 sichern. Auf der entgegen der Umlaufrichtung U weisenden Seite wird das Zinkenendstück 301 von einem Abstützteil 304' des Haltearmes 304 überlappt und abgestützt, so daß der Übergangsbereich zwischen dem Zinkenendstück 301 und dem Endzapfen 303 bei der Bodenbearbeitung praktisch nicht auf Scherung beansprucht werden kann.

Im Beispiel der Fig. 6 ist am freien Ende des Zinkenendstückes 301 ein scharblattartiges Messerteil 307 angeformt, welches etwa tangential zu einer Umhüllenden des Zinkenrotors 3 ausgerichtet ist. Durch dieses Messerteil 307 wird gegebenenfalls die Schälwirkung des Zinkenrotors 3 erhöht.

**Patentansprüche**

1. Bodenbearbeitungsgerät mit Packer- oder Krümlerwalze (5), welche eine im wesentlichen geschlossene Umfangsfläche mit in parallelen umlaufenden Reihen angeordneten, in den Boden eindringenden Zähnen (207) besitzt, zwischen denen Abstreifer (209) mit verstellbaren Abstreiferblechen (210) und dieselben tragenden Haltestielen (211) angeordnet sind, die ihrerseits an einem Rahmenteil (213) des Gerätes bzw. der Walze (5) um eine Querachse schwenkbar gehaltert sind, dadurch gekennzeichnet, daß das Abstreiferblech (210) bzw. ein dasselbe tragendes Teil und der Haltestiel (211) jedes Abstreifers (209) als Teile eines einstückigen Blechteiles mit einem im Querschnitt etwa U-förmigen, den Haltestiel (211) bildenden Mittelbereich ausgebildet sind, an den sich zur Befestigung am Rahmenteil (213) ein Laschen- bzw. Flachbandteil (212) einstückig anschließt, und daß die Haltestiele (211) mittels am Rahmenteil (213) angeordneter Stellschrauben (218) od.dgl. gegen den Widerstand des sich dabei verbiegenden Übergangbereiches zwischen Haltestiel (211) und Laschen- bzw. Flachbandteil (212) in Richtung der Walze (5) verstellbar sind.

2. Bodenbearbeitungsgerät nach Anspruch 1, dadurch gekennzeichnet, daß das Laschen- bzw. Flachbandteil (212) am Rahmenteil (213) kraftschlüssig mittels Spannteilen (214) befestigt ist, an denen jeweils die Stellschraube (218) angeordnet ist.

3. Bodenbearbeitungsgerät nach einem der Ansprüche 1 oder 2, dadurch gekennzeichnet, daß als Spannvorrichtung jeweils ein U-Bügel (215), dessen eines Endteil im Übergangsbereich zwischen Laschen- bzw. Flachbandteil (212) und Haltestiel (211) eine Öffnung durchsetzt und dessen Mittelteil und anderes Endteil auf dem Laschen- bzw. Flachbandteil (212) aufliegen, unter Umfassung eines Rahmenquerholmes (213) sowie des Laschen- bzw. Flachbandteiles (212) mit einer von den Endstücken durchsetzten Platte (216) verspannt ist, in der eine Gewindebohrung für die Stellschraube (218) angeordnet ist.

4. Bodenbearbeitungsgerät nach einem der Ansprüche 1 bis 3, dadurch gekennzeichnet, daß die Zähne (207, 207') an der Walze in jeder Reihe jeweils unter Freilassung von Lücken aufeinanderfolgen, deren Querschnitt – in Achsansicht der Walze (5) gesehen – größenordnungsmäßig mindestens dem Querschnitt der Zähne (207,207') entspricht, und daß die Zähne (207, 207') benachbarter Reihen – in Achsansicht der Walze (5) gesehen – versetzt zueinander angeordnet sind, derart, daß jeder Zahn (207 bzw. 207') einer Reihe in Höhe einer Lücke der anderen Reihe angeordnet ist, wobei der Abstand benachbarter Zahnreihen größenordnungsmäßig vorzugsweise etwa zumindest der Höhe der Zähne (207, 207') entspricht.

5. Bodenbearbeitungsgerät nach Anspruch 4, dadurch gekennzeichnet, daß die im wesentlichen plattenförmigen Zähne (207, 207') eine entgegen der Umlaufrichtung (U) der Walze (5) weisende Vorderkante (207a), welche mit der Umfangsfläche (208) der Walze (5) einen spitzen Winkel einschließt, eine zur Vorderkante (207a) im wesentlichen parallele Hinterkante (207b) sowie eine zwischen Vorder- und Hinterkante erstreckte Außenkante (207c) besitzt, deren Abstand von der Umfangsfläche (208) von der Vorderkante (207a) zur Hinterkante (207b) hin abnimmt.

6. Bodenbearbeitungsgerät mit einem vor der Packer- bzw. Krümlerwalze (5) angeordneten, in die Fahrtrichtung unterstützender Umlaufrichtung (U) antreibbaren Zinkenrotor (3) mit einer denselben abschirmenden Abdeckung (4) die fest an einem den Zinkenrotor tragenden Rahmen (2) angeordnet ist, nach einem der Ansprüche 1 bis 5, dadurch gekennzeichnet, daß der durch die feste Abdeckung (4) im wesentlichen nur nach oben abgeschirmte Zinkenrotor (3) nach hinten im wesentlichen nur durch die dicht bzw. unmittelbar hinter dem Zinkenrotor (3) angeordnete Walze (5) abgeschirmt ist und deren zinkenrotorseitiger Umfangsflächenbereich als umlaufende Prallfläche die vom Zinkenrotor (3) aufgeworfene Erde zur Bodenoberfläche leitet.

7. Bodenbearbeitungsgerät mit zapfwellengetriebenem Zinkenrotor (3), dessen Zinkenendstücke jeweils tangential zu einem die Rotorachse umschließenden Kreisbogen angeordnet sind, wobei das freie Ende der Zinkenendstücke jeweils mit einem von der Rotorachse zum freien Zinkenende erstreckten Radialstrahl einen spitzen Winkel einschließt, nach einem der Ansprüche 1 bis 6, dadurch gekennzeichnet, daß an den freien Enden der Zinkenendstücke (301) – vorzugsweise in Umlaufrichtung zugespitzte – scharartige Platten (307) etwa tangential zu einer Umhüllenden des Rotors (3) angeordnet sind.

8. Bodenbearbeitungsgerät nach einem der Ansprüche 1 bis 7, dadurch gekennzeichnet, daß zur Ankopplung weiterer Geräteteile, wie z. B. einer Sämaschine (14), am Rahmen (2) ein parallelogrammartiges Hubgestänge (7) angeordnet ist, welche das zusätzliche Gerät aus einer hinter dem Bodenbearbeitungsgerät abgesenkten Arbeitslage in eine Transportlage oberhalb des Bodenbearbeitungsgerätes anzuheben gestattet, wobei zur Verstellung des Hubgestänges (7) ein Kolben-Zylinder-Aggregat (8) angeordnet ist, dessen Hubweg durch Anschlagzapfen (9) od.dgl. begrenzbar ist, welche sich in zumindest eine parallel zum KolbenZylinder-Aggregat (8) am einen Teil, Kolbenstange oder Zylinder, angeordneten Stange (10) anordnen lassen, welche in einem am anderen Teil des Kolben-Zylinder-Aggregates (8) angeordnetem Aufnahmeteil teleskopartig verschiebbar gelagert ist.

**Claims**

1. Ground working apparatus comprising a packer roller or roller tiller (5) which has a substantially closed peripheral surface with teeth (207) which are arranged in parallel peripherally extending rows and which penetrate into the ground, wherein scrapers (209) with adjustable scraper blades (210) and holding shafts (211) carrying the latter are arranged between the teeth and are in turn mounted on a frame part (213) of the apparatus, or of the roller (5), and are pivotable about a transverse axis, characterised in that the scraper blade (210) or a part carrying the same and the holding shaft (211) of each scraper (209) are formed as portions of a one-piece sheet metal part having a central region forming the holding shaft (211) which is approximately U-shaped in cross-section and which is adjoined in one-piece manner by a lug or flat band portion (212) for mounting on the frame part (213); and in that the holding shafts (211) are adjustable in the direction of the roller (5), by means of positioning screws (218) or the like arranged on the frame part (213), against the resistance of the transition region between the holding shaft (211) and the lug or flat band portion (212) which bends during this adjustment.

2. Ground working apparatus in accordance with claim 1, characterised in that the lug or flat band portion (212) is secured to the frame part (213) in force transmitting manner by means of clamping parts (214) on which in each case the positioning screw (218) is arranged.

3. Ground working apparatus in accordance with one of the claims 1 or 2, characterised in that as a clamping device there is in each case provided a U-shaped hoop (215) the one end part of which passes through an opening in the transition region between the lug or flat band portion (212) and the holding shaft (211), and the middle part and other end part of which contact the lug or flat band portion (212) while surrounding a transverse frame spar (213) and also the lug or flat band portion (212), with the hoop being clamped by a plate (216) through which the end pieces pass, with a threaded bore for the positioning screw (218) being arranged in the plate.

4. Ground working apparatus in accordance with one of the claims 1 to 3, characterised in that the teeth (207, 207') on the roller in each row follow one another leaving respective gaps, with the cross-section of the gaps corresponding – as seen in the axial view of the roller (5) – in order of magnitude at least to the cross-section of the teeth (207, 207'); and in that the teeth (207, 207') of neighbouring rows are arranged displaced relative to one another – as seen in the axial view of the roller (5) – in such a way that each tooth (207 or 207') of one row is arranged at the level of a gap of the other row, with the spacing of adjacent teeth rows corresponding in order of magnitude preferably to at least approximately the height of the teeth (207, 207').

5. Ground working apparatus in accordance with claim 4, characterised in that the substantially plate-like teeth (207, 207') have a front edge (207a) which points away from the peripheral direction of movement (U) of the roller (5) and which includes an acute angle with the peripheral surface (208) of the roller (5), a rear edge (207b) which is substantially parallel to the front edge (207a) and also an outer edge (207c) extending between the front edge and the rear edge with the spacing of the outer edge from the peripheral surface (208) reducing from the front edge (207a) to the rear edge (207b).

6. Ground working apparatus comprising a tyned rotor (3) drivable in a direction of rotation (U) which assists the direction of travel and which is arranged in front of the packing roller or roller tiller (5) and which has a cover (4) which screens off the tyned rotor and which is fixedly arranged on a frame (2) carrying the tyned rotor, in accordance with one of the claims 1 to 5, characterised in that the tyned rotor (3), which is substantially only screened off towards the top by the fixed cover (4), is screened off to the rear essentially only by the roller (5) which is arranged closely and directly behind the tyned rotor (3), with the peripheral surface of the roller at the tyned rotor side directing, as a rotating impact surface, the earth thrown up from the tyned rotor (3) to the ground surface.

7. Ground working apparatus with power take-off shaft driven tyned rotor (3), the tyne end pieces of which are each arranged tangential to a circular arc surrounding the rotor axis, with the free end of the tyne end pieces each including an acute angle with a radial ray extending from the rotor axis to the free tyne end, in accordance with one of the claims 1 to 6, characterised in that claw-like plates (307) – which are preferably pointed in the direction of rotation – are arranged at the free ends of the tyne end pieces (301), approximately tangential to an envelope line of the rotor (3).

8. Ground working apparatus in accordance with one of the claims 1 to 7, characterised in that for the coupling on of further pieces of apparatus such as a sowing machine (14) to the frame (2) a parallelogram-like lifting linkage (7) is provided which permits the lifting of the additional apparatus from a lowered working position behind the ground working apparatus into a transport position above the ground working apparatus, with a piston in cylinder unit (8) being provided for the adjustment of the lifting linkage (7), and with the stroke of the piston in cylinder unit being restrictable by abutment spigots (9) or the like which can be arranged in at least one bar which is arranged parallel to the piston in cylinder unit 8 on one of the parts piston rod or cylinder and which is telescopically displaceably mounted in a mounting part arranged on the other part of the piston in cylinder unit (8).

**Revendications**

1. Machine de travail du sol comprenant un rouleau compacteur ou émotteur (5), qui possède une surface circonférentielle sensiblement fermée qui porte des dents (207) pénétrant dans le sol, qui sont disposées en rangées circonférentielles parallèles, entre lesquelles sont disposés des racleurs (209) possédant des lames racleuses réglables (210) et des tiges supports (211) qui portent ces lames, ces tiges étant à leur tour fixées à un élément de châssis (213) de la machine ou du rouleau (5) de façon à pouvoir pivoter autour d'un axe transversal, caractérisée, en ce que la lame racleuse (210), ou une partie qui la porte, et la tige support (211) de chaque racleur (209) forment des parties d'une pièce de tôle d'un seul tenant possédant une région centrale à peu près en forme de U en section transversale qui forme la tige support (221), et à laquelle fait suite, d'un seul tenant, une partie patte ou bande plate (212) servant à la fixation sur l'élément de châssis (213), et en ce que les tiges supports (211) peuvent être réglées en direction du rouleau, (5) au moyen de vis de réglage (218) ou équivalents, montées sur l'élément de châssis (213), à l'encontre la résistance de la région de transition entre la tige support (211) et la partie patte ou bande plate (212), qui se plie dans cette action.

2. Machine de travail du sol selon la revendication 1, caractérisée en ce que la partie patte ou bande plate (212) est fixée à l'élément de châssis (213) par une liaison opérant par action de force, au moyen d'éléments de serrage (214), sur chacun desquels la vis de réglage (218) est montée.

3. Machine de travail du sol selon une des revendications 1 et 2, caractérisée en ce que, en qualité de dispositif de serrage, il est prévu pour chaque racleur, un étrier en U dont une partie d'extrémité traverse une ouverture ménagée dans la région de transition entre une partie patte ou partie bande plate (212) et la tige support (211), et dont la partie centrale et l'autre partie d'extrémité prennent appui sur la partie patte ou bande plate (212), en embrassant une traverse (213) du châssis, ainsi que la partie patte ou bande plate (212), cet étrier étant serré au moyen d'une plaque (216) traversée par les parties d'extrémités, et dans laquelle est prévu un perçage fileté destiné à recevoir la vis de réglage (218).

4. Machine de travail du sol selon une des revendications 1 à 3, caractérisé en ce que, dans chaque rangée, les dents (207, 207') se succèdent sur le rouleau, dans chaque rangée, en ménageant des creux de denture dont la section – considérée dans une vue axiale du rouleau (5) – correspond en ordre de grandeur au moins à la section des dents (207, 207' ) et en ce que les dents (207, 207') des rangées adjacentes – considérées dans la direction axiale du rouleau (5) – sont décalées les unes par rapport aux autres de telle manière que chaque dent (207 ou 207') d'une rangée soit disposée au droit d'un creux de denture de l'autre rangée, la distance entre les rangées de dents adjacentes correspondant de préférence, en ordre de grandeur, au moins à peu près à la hauteur des dents (207, 207').

5. Machine de travail du sol selon la revendication 4, caractérisée en ce que les dents (207, 207') qui sont sensiblement en forme de plaque, possèdent un bord avant (207a) dirigé en sens inverse du sens de rotation (U) du rouleau (5), qui forme un angle aigu avec la surface circonférentielle (210) du rouleau (205), un bord arrière (207b) sensiblement parallèle au bord avant (207a), ainsi qu'un bord extérieur (207c) qui s'étend entre le bord avant et le bord arrière et dont la distance à la surface circonférentielle (208) décroît du bord avant (207a) jusqu'au bord arrière (207b).

6. Machine de travail du sol comprenant un rotor à dents ( 3) disposé en avant du rouleau compacteur ou émotteur (5), qui peut être entraîné dans le sens circonférentiel (U) qui assiste le sens de la marche, muni d'un capot de recouvrement (4) qui le recouvre et qui est monté rigidement sur un châssis (2) qui porte le rotor à dents, selon une des revendications 1 à 5, caractérisée en ce que le rotor à dents (3) qui n'est recouvert que sensiblement vers le haut par le recouvrement fixe (4), n'est sensiblement masqué vers l'arrière que par le rouleau (5) qui est agencé à proximité du rotor à dents (3) ou directement en arrière de ce rotor, et dont la région de surface circonférentielle dirigée vers le rotor à dents, se comporte comme une surface cible tournante, et rejette vers la surface du sol la terre qui a été projetée vers le haut par le rotor à dents (3).

7. Machine de travail du sol équipée d'un rotor à dents (3) entraîné par un arbre de prise de force, dont les embouts des dents sont disposés chacun tangentiellement à un arc de cercle qui entoure l'axe du rotor, l'extrémité libre des embouts de dents formant un angle aigu avec un rayon tracé de l'axe du rotor à l'extrémité libre de la dent, selon une des revendications 1 à 6, caractérisée en ce qu'aux extrémités libres des embouts de dents (301) sont disposées, à peu près tangentiellement à une enveloppe du rotor (3), des plaques (316) en forme de soc – qui sont de préférence effilées en pointe dans la direction circonférentielle.

8. Machine de travail du sol selon une des revendications 1 à 7, caractérisée en ce que, pour atteler d'autres appareils comme, par exemple, un semoir (14), il est prévu sur le châssis (2) un mécanisme élévateur (7) en forme de parallélogramme, qui permet de relever la machine additionnelle d'une position de travail abaissée derrière la machine de travail du sol à une position de transport située au-dessus de la machine de travail du sol, cependant que, pour la manoeuvre du mécanisme élévateur (7), il est prévu un vérin à piston et cylindre (8) dont la course peut être limitée par des broches de butée (9) ou équivalents, qui peuvent être disposées dans au moins une tige (10), montée parallèlement au vérin à piston et cylindre (8) sur un élément du vérin, la tige de piston ou le cylindre, laquelle tige est montée mobile en translation télescopique dans une partie réceptrice agencée sur l'autre élément du vérin à piston et cylindre (8).

*Fig.1*

*Fig.2*

EP 0 161 621 B1

Fig. 3

Fig. 4

EP 0 161 621 B1

_Fig. 5_

305

304

301

+

306

304'

U

_Fig. 6_

303

301

307